# EUROPEAN PATENT APPLICATION

(11) **EP 3 922 828 A1**
(43) Date of publication of application: **15.12.2021**
(21) Application number: 21175544.2
(22) Date of filing: 24.05.2021
(51) Int. Cl.: F02C 7/057, F02C 7/277

(54) **CLOSED-LOOP CONTROLLED AIR TURBINE START SYSTEM**

(30) Priority: 11.06.2020 US 202016899337
(71) Applicant: Honeywell International Inc., Charlotte, NC 28202 (US)
(72) Inventor: JONES, Kevin A.K., Charlotte, 28202 (US); TUCKER, Jennifer Dubec, Charlotte, 28202 (US); SHERWIN, Zachary, Charlotte, 28202 (US)
(74) Representative: Lucas, Peter Lawrence

(57) **Abstract**

An air turbine start system includes an air supply duct, an air turbine starter, a starter air valve, a stepper motor, and a controller. The air turbine starter is coupled to the air supply duct to selectively receive a flow of pressurized air therefrom. The starter air valve is mounted on the air supply duct and is movable between a closed position and a plurality of open positions. The stepper motor is coupled to the starter air valve and is configured, in response to valve position commands, to move the starter air valve between the closed position and one or more of the plurality of open positions. The controller is coupled to the stepper motor and is configured to supply the valve position commands to the stepper motor and determine a position of the starter air valve based on the valve position commands supplied to the stepper motor.

## Description

### TECHNICAL FIELD

The present disclosure generally relates to air turbine start systems (ATSSs), and more particularly relates to an ATSS that uses implements closed-loop control.

### BACKGROUND

Many relatively large gas turbine engines, including turbofan jet engines, may use an air turbine start system (ATSS) to initiate turbine engine rotation. The ATSS typically includes and air turbine starter (ATS) that is mounted by the engine, much as a starter for an automobile is located by the automobile engine. The ATS may be coupled to a high-pressure fluid source, such as compressed air, which impinges upon a turbine in the ATS causing it to rotate at a relatively high rate of speed. The ATS includes an output shaft that is coupled to the turbine and, via one or more gears, to the gas turbine engine. The output shaft thus rotates with the turbine. This rotation in turn causes the gas turbine engine to begin rotating.

The flow of compressed air to an ATS may be controlled by, for example, a valve. This valve, if included, is typically referred to as a starter air valve (SAV), and may be controllably moved between a closed position and an open position via a signal supplied from an engine control, such as a full-authority digital engine control (FADEC). When the starter air valve is in the open position, compressed air may flow through the starter air valve, and into the ATS. Conversely, when the starter valve is in the closed position, compressed air flow to the ATS may be prevented.

Currently, many ATSSs do not implement active closed-loop control. This means that varying conditions during a gas turbine engine start or motoring sequence may potentially result in damage to the gas turbine engine. Hence, there is a need for an ATSS that at least mitigates, if not eliminates, the likelihood of damage to a gas turbine engine during a start or motoring sequence. The instant disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an air turbine start system includes an air supply duct, an air turbine starter, a starter air valve, a stepper motor, and a controller. The air supply duct is adapted to receive a flow of pressurized air from a pressurized air source. The air turbine starter is coupled to the air supply duct to selectively receive the flow of pressurized air therefrom. The starter air valve is mounted on the air supply duct and is movable between a closed position, in which the flow of pressurized air is not supplied to the air turbine starter, and a plurality of open positions, in which the flow of pressurized air is supplied to the air turbine starter. The stepper motor is coupled to the starter air valve and is configured, in response to valve position commands, to move the starter air valve between the closed position and one or more of the plurality of open positions. The controller is coupled to the stepper motor and is configured to (i) supply the valve position commands to the stepper motor and (ii) determine a position of the starter air valve based on the valve position commands supplied to the stepper motor.

In another embodiment, a gas turbine engine system includes a gas turbine engine, an air turbine starter, an air supply duct, a starter air valve, a stepper motor, and a controller. The air turbine starter is coupled to the gas turbine engine and is further coupled to selectively receive a flow of pressurized air. The air supply duct is coupled to the air turbine starter and is adapted to receive pressurized air from a pressurized air source. The starter air valve is mounted on the air supply duct and is movable between a closed position, in which the flow of pressurized air is not supplied to the air turbine starter, and a plurality of open positions, in which the flow of pressurized air is supplied to the air turbine starter. The stepper motor is coupled to the starter air valve and is configured, in response to valve position commands, to move the starter air valve between the closed position and one or more of the plurality of open positions. The controller is coupled to the motor and is configured to (i) supply the valve position commands to the stepper motor and (ii) determine a position of the starter air valve based on the valve position commands supplied to the stepper motor.

In yet another embodiment, an air turbine start system includes an air supply duct, an air turbine starter, a starter air valve, a stepper motor, a speed sensor, a pressure sensor, and a controller. The air supply duct is adapted to receive a flow of pressurized air from a pressurized air source. The air turbine starter is coupled to air supply duct to selectively receive the flow of pressurized air therefrom. The starter air valve is mounted on the air supply duct and is movable between a closed position, in which the flow of pressurized air is not supplied to the air turbine starter, and a plurality of open positions, in which the flow of pressurized air is supplied to the air turbine starter. The stepper motor is coupled to the starter air valve and is configured, in response to valve position commands, to move the starter air valve between the closed position and one or more of the plurality of open positions. The speed sensor is configured to sense rotational speed of the air turbine starter and supply a speed signal representative thereof. The pressure sensor is configured to sense air pressure downstream of the starter air valve and supply a pressure signal representative thereof. The controller is coupled to the stepper motor and is coupled to receive the speed signal and the pressure signal, the controller is configured, at least in response to the speed signal and the pressure signal to (i) supply the valve position commands to the stepper motor and (ii) determine a position of the starter air valve based on the valve position commands supplied to the stepper motor.

Furthermore, other desirable features and characteristics of the air turbine start system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of an exemplary embodiment of a portion of a gas turbine engine system; and
FIG. 2 depicts a cross section view of one exemplary embodiment of an air turbine starter.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

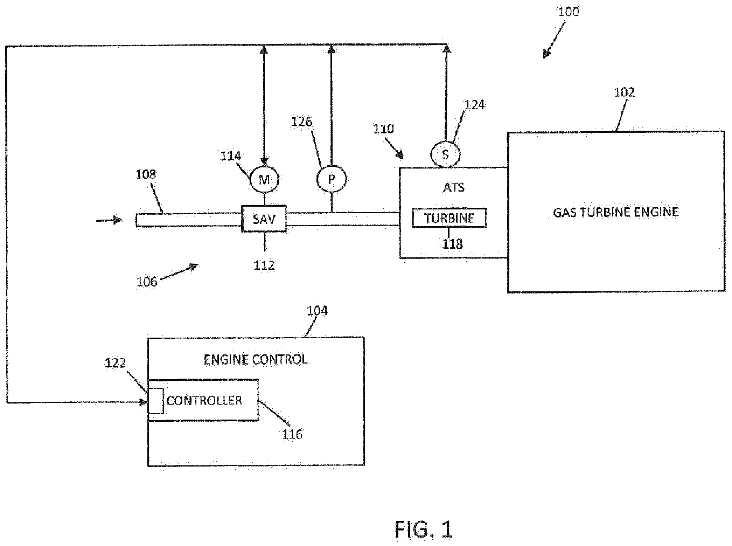

Referring first to FIG. 1, a functional block diagram of an exemplary embodiment of a portion of a gas turbine engine system 100 is depicted, and includes a gas turbine engine 102, an engine control 104, and an air turbine start system 106. The gas turbine engine 102, which may be implemented using any one of numerous gas turbine engines now known or developed in the future, is coupled to receive a flow of fuel from a non-illustrated fuel source and, in response to various signals from the engine control 104, to ignite the fuel and generate a torque.

The engine control 104 is coupled to the gas turbine engine 102 and the air turbine start system 106. The engine control 104 is configured to, among other things, control the supply of fuel to the gas turbine engine 102, and to control portions of the air turbine start system 106. The engine control 104 may be variously implemented. In the depicted embodiment, it is implemented using a full-authority digital engine control (F ADEC).

The air turbine start system 106 includes an air supply duct 108, an air turbine starter 110, a starter air valve (SAV) 112, a stepper motor 114, and a controller 116. The air supply duct 108 is adapted to receive a flow of pressurized air from a non-illustrated pressurized air source. The pressurized air source may vary, and may include a ground-operated cart, an auxiliary power unit (APU), or cross-bleed from another operating engine.

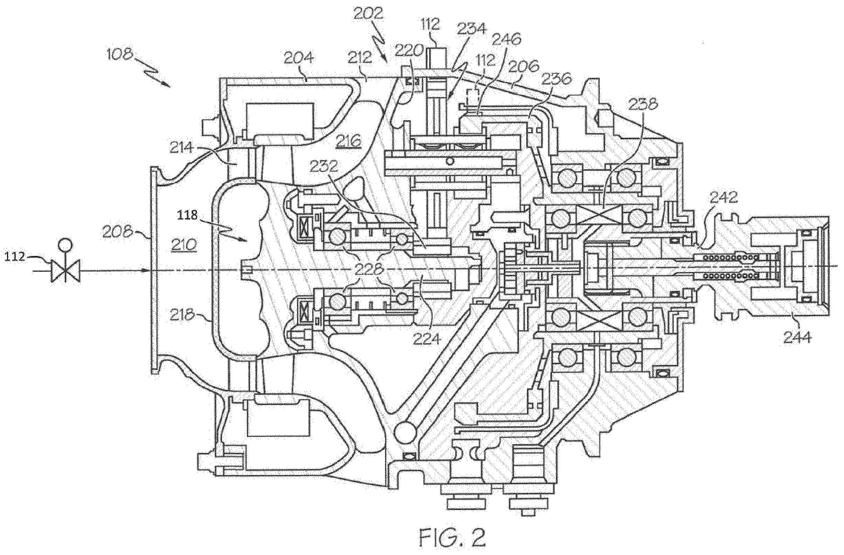

The ATS 110 is coupled to the gas turbine engine 102 and includes a rotationally mounted turbine 114. The ATS 108 is coupled to selectively receive, via the air supply duct 108 and the SAV 112, the flow of pressurized air from the non-illustrated pressurized air source. The ATS 110 is configured, upon receipt of the pressurized air, to direct the pressurized air into the turbine 114. The pressurized air impinges upon the turbine 114, causing it to accelerate, at an acceleration rate, to a rotational speed. The ATS 110 is coupled to, and thus rotates, the gas turbine engine 102. It will be appreciated that the ATS 110 may be variously configured. For completeness, a cross section view of one exemplary embodiment of an ATS 108 is depicted in FIG. 2, and with reference thereto will now be described.

The depicted ATS 110 includes a housing assembly 202 that is used to house various components. The housing assembly 202 may be made up of two or more parts that are combined together or may be integrally formed as a single piece. In the depicted embodiment, the housing assembly is made up of a turbine section 204 and an output section 206. The housing assembly turbine section 204 includes an inlet plenum 208, which directs the pressurized air from the pressurized air source (not illustrated) into the housing assembly 202, via the SAV 112, which, for ease of illustration, is depicted schematically in FIG. 2. It will be appreciated that the pressurized air source may be any one of numerous known sources for supplying pressurized air to an ATS 110. For example, the non-illustrated pressurized air source could be an auxiliary power unit, bleed air from another operating gas turbine engine, or a gas turbine ground power cart.

When pressurized air is supplied to the ATS 110, the pressurized air enters the inlet plenum 208, flows through an annular flow channel 210, and exits the ATS 110 via a radial outlet port 212. The annular flow channel 210 includes an axial flow portion 214 and a substantially curved flow portion 216. The axial flow portion 214 is formed through a stator assembly 218 that is mounted within the housing assembly turbine section 204 proximate the inlet plenum 208. The radial flow portion 216, which flares the annular flow channel 210 radially outwardly, is formed between a portion of the housing assembly turbine section 204 and an exhaust housing 220 that is mounted within the housing assembly 202.

The turbine 118 is rotationally mounted within the housing assembly turbine section 204, and includes an output shaft 224, that extends through the exhaust housing 220, and into the housing assembly output section 206. The output shaft 224 is rotationally mounted in the housing assembly output section 206 by bearing assemblies 228. The output shaft 224 is coupled, via an output gear 232, to a plurality of gears. In the depicted embodiment, these gears include a planetary gear set 234 and a ring gear 236. In particular, the output gear or sun gear 232 meshes with the planetary gear set 234, which in turn engages the ring gear 236.

The ring gear 236 is coupled to an overrunning clutch 238. A drive shaft 242 extends from the overrunning clutch 238, through the turbine housing output section 206, and is coupled to an output shaft 244. The output shaft 244 is in turn coupled to the gas turbine engine 102. The overrunning clutch 238 disengages the turbine 118 and gears from the output shaft 244, and prevents the turbine 118 from being back-driven at the speed of the gas turbine engine 102.

Returning now to FIG. 1, the SAV 112 is mounted on the air supply duct 108 and movable between a closed position and a plurality of open positions. When the SAV 110 is in the closed position, the non-illustrated pressurized air source is fluidly isolated from the ATS 108, and pressurized air does not flow into the ATS 108. Conversely, when the SAV 110 is in an open position, the non-illustrated pressurized air source is in fluid communication with the ATS 108, and pressurized air may flow into the ATS 110.

The stepper motor 114 is coupled to the SAV 112 and is configured, in response to valve position commands, to move the SAV 112 between the closed position and one or more of the open positions. Although the stepper motor 114 may be variously controlled, in one example embodiment, the valve position commands supplied to the stepper motor 114 comprise electrical pulses, where each pulse causes the stepper motor 114 to rotate one step. Thus, the number of steps the stepper motor rotates 114 is equal to (or at least proportional to) the number of pulses supplied thereto. The rate at which the stepper motor rotates is equal to the frequency of the electrical pulses, and the direction in which the stepper motor rotates 114 may be controlled by the sequence in which the electrical pulses are supplied.

The controller 116 is coupled to the stepper motor 114 and is configured to supply the valve position commands to the stepper motor 114. In the depicted embodiment, the controller 116 includes a motor driver 122, which provides the electrical pulses to the stepper motor 114. As noted above, the number of steps the stepper motor rotates 114 is equal to (or at least proportional to) the number of pulses supplied thereto. Thus, the position of the SAV 112 may be determined based on the valve position commands supplied to the stepper motor 114. More specifically, at least in the depicted embodiment, the controller 116 is configured to count each step of the stepper motor 114 and determine the position of the SAV 112 from the count. Thus, a separate valve position sensor is not needed, nor desired, in the ATSS 106 disclosed herein.

Before proceeding further, it is noted that the controller 116, at least in the depicted embodiment, is disposed within the engine control (or FADEC) 104. It will be appreciated, however, that in other embodiments the controller 116 may, if needed or desired, be implemented separate from the engine control 104.

Returning now to the description, the ATSS 106 may be configured to include one or more additional sensors. In the depicted embodiment, the ATSS 106 includes at least two additional sensors - a speed sensor 124 and a pressure sensor 126. It will be appreciated that in some embodiments, the ATSS 106 may be implemented with only one of the sensors 124, 126.

The speed sensor 124 is configured to sense the rotational speed of the air turbine starter 110 and to supply a speed signal representative thereof to the controller 116. In the depicted embodiment, the speed sensor 124 is disposed to sense the rotational speed of the turbine 118. It will be appreciated, however, that the speed sensor 124 may be disposed at any one of numerous places to sense the rotational speed of any one of numerous rotating components within the ATS 110. It will additionally be appreciated that the speed sensor 124 may be implemented using any one of numerous known speed sensors now known or available in the future. Some non-limiting examples include various monopole sensors, Hall-effect sensors, optical sensors, magneto-resistive sensors, and Eddy current sensors, just to name a few.

Regardless of the type of speed sensor 124 that is used, the controller 116 is further configured, in response to the speed signal, to control the valve position commands supplied to the stepper motor 114, and thus control the position of the SAV 112. This in turn allows the controller 116, in response to the speed signal, to control the valve position commands supplied to the stepper motor 114 to thereby control air turbine starter acceleration rate and/or rotational speed. Controlling ATS 110 speed allows for any desired rotational speed input for the gas turbine engine 102 to be achieved and maintained with active correction. Controlling speed also has the potential to avoid extended operation at turbine resonance conditions. Controlling acceleration rate can minimize ATS 110 impact torque during a running engagement start, which protects the gas turbine engine 102 and ATS 110 from over-torque.

The pressure sensor 126 is configured to sense air pressure downstream of the SAV 112 and supply a pressure signal representative thereof to the controller 116. It will be appreciated that the pressure sensor 126 may be disposed at any one of numerous locations on the air supply duct 108 downstream of the SAV 112, to thereby sense ATS inlet pressure. It will additionally be appreciated that the pressure sensor 124 may be implemented using any one of numerous known pressure sensors now known or available in the future. Some non-limiting examples include various potentiometric pressure sensors, inductive pressure sensors, capacitive pressure sensors, piezoelectric pressure sensors, strain gauge pressure sensors, and variable reluctance pressure sensors, just to name a few.

Regardless of the type of pressure sensor 126 that is used, the controller 116 is further configured, in response to the pressure signal, to control the valve position commands supplied to the motor, and thus control the position of the SAV 112. This in turn allows the controller 116, in response to the pressure signal, to control the valve position commands supplied to the stepper motor 114 to thereby control air turbine starter output torque. Controlling ATS 110 output torque allows for any desired torque input to the gas turbine engine 102 to be achieved and maintained with active correction. Controlling maximum input pressure to the ATS 110 may also minimize torque transmittal from the gas turbine engine 102 to the ATS 110 during operation, which protects the gas turbine engine 102 and ATS 100 from over-torque due to inertial loads of the gas turbine engine 102.

This system 100 described herein decreases the likelihood of, and potentially eliminates, damage to the gas turbine engine 102 during a start or motoring sequence as a result of varying conditions (i.e. Bowed Rotor Motoring, Low Energy Start) by modulating SAV 112 position, via the controller 116, stepper motor 114, and (at least in some embodiments) speed and pressure sensors 124, 126, to implement speed and output torque control while also allowing for condition monitoring of the start system using closed-loop feedback, which can be programmed based upon specific engine needs.

Having an ATSS 106 that can be programmed to maintain constant or variable, maximum or minimum, rotational speed and output torque, conditions under which potential damage to the gas turbine engine 102 during a start or motoring sequence can be prevented. Moreover, non-optimal start conditions can be detected during a start sequence using the sensors 124, 126 to prevent the initiation of a light-off sequence with non-optimal input conditions to the gas turbine engine 102. Closed-loop control of SAV 112 position minimizes any unnecessary movement of the SAV 112 during modulation, thereby minimizing pressure spikes and fluctuations which can cause excessive wear and damage to tandem systems utilized during a start sequence.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An air turbine start system, comprising:
an air supply duct adapted to receive a flow of pressurized air from a pressurized air source;
an air turbine starter coupled to the air supply duct to selectively receive the flow of pressurized air therefrom;
a starter air valve mounted on the air supply duct and movable between a closed position, in which the flow of pressurized air is not supplied to the air turbine starter, and a plurality of open positions, in which the flow of pressurized air is supplied to the air turbine starter;
a stepper motor coupled to the starter air valve and configured, in response to valve position commands, to move the starter air valve between the closed position and one or more of the plurality of open positions; and
a controller coupled to the stepper motor and configured to (i) supply the valve position commands to the stepper motor and (ii) determine a position of the starter air valve based on the valve position commands supplied to the stepper motor.

2. The system of claim 1, wherein the controller is configured to count each step of the stepper motor and determine the position of the starter air valve from the count.

3. The system of claim 1, further comprising:
a speed sensor configured to sense rotational speed of the air turbine starter and supply a speed signal representative thereof to the controller,
wherein the controller is further configured, in response to the speed signal, to control the valve position commands supplied to the stepper motor.

4. The system of claim 3, wherein the controller, in response to the speed signal, controls the valve position commands supplied to the stepper motor to thereby control air turbine starter acceleration rate.

5. The system of claim 3, wherein the controller, in response to the speed signal, controls the valve position commands supplied to the stepper motor to thereby control air turbine starter speed.

6. The system of claim 1, further comprising:
a pressure sensor configured to sense air pressure downstream of the starter air valve and supply a pressure signal representative thereof to the controller,
wherein the controller is further configured, in response to the pressure signal, to control the valve position commands supplied to the stepper motor.

7. The system of claim 6, wherein the controller, in response to the pressure signal, controls the valve position commands supplied to the stepper motor to thereby control air turbine starter output torque.

8. The system of claim 1, further comprising a gas turbine engine coupled to the air turbine starter.

9. The system of claim 8, further comprising: an engine control configured to control operations of the gas turbine engine, wherein the engine control comprises the controller.
